# EUROPÄISCHE PATENTSCHRIFT

(11) **EP 2 356 416 B1**
(45) Veröffentlichungstag und Bekanntmachung des Hinweises auf die Patenterteilung: **12.04.2017**
(21) Anmeldenummer: 09744968.0
(22) Anmeldetag: 29.10.2009
(51) Int. Cl.: G01L 1/22, G01L 1/26, G01L 5/16, G01G 3/14, G01G 23/00, G01L 1/04

(54) **KRAFTMESSPLATTE**
FORCE PLATE
PLAQUE DE MESURE DE FORCE

(30) Priorität: 11.11.2008 DE 102008056715
(43) Veröffentlichungstag der Anmeldung: 17.08.2011
(73) Patentinhaber: Sartorius Lab Instruments GmbH & Co. KG, 37079 Göttingen (DE)
(72) Erfinder: KUHLMANN, Otto, 37085 Göttingen (DE); MÜCK, Tanja, 38685 Langelsheim (DE); RELLING, Volker, 23816 Gross Niendorf (DE); PETZOLD, Gerald, 22952 Lütjensee (DE)
(74) Vertreter: Schneider, Peter Christian
(86) Internationale Anmeldenummer: PCT/EP2009/007736
(87) Internationale Veröffentlichungsnummer: WO 2010/054749

(56) Entgegenhaltungen:
- WO-A1-2006/096736
- DE-B3-102006 031 950
- JP-A- 9 318 469
- US-A- 4 483 203
- US-A- 5 490 427

## Beschreibung

Die Erfindung betrifft eine Kraftmessplatte, bestehend aus einem plattenförmigen Träger, der bei vertikaler Anordnung in vertikaler Richtung oben einen oberen Trägerabschnitt und in vertikaler Richtung unten einen unteren Trägerabschnitt aufweist, wobei ein erster endseitiger Trägerabschnitt vorgesehen ist, der einerseits über einen vertikalen Stab mit dem oberen Trägerabschnitt und andererseits über ein horizontal ausgerichtetes und Dehnungsmessstreifen aufweisendes Federelement mit dem unteren Trägerabschnitt verbunden ist

Aus der DE 28 13 769 A1 ist eine Kraftmessplatte bekannt, die in Verbindung mit einer zweiten Messplatte eine elektronische Waage bildet. Die bekannte Messplatte besteht aus einem plattenförmigen Träger, der vertikal angeordnet wird, oben einen oberen Trägerabschnitt und unten einen unteren Trägerabschnitt aufweist, wobei mindestens an einer Endseite der Kraftmessplatte ein endseitiger Trägerabschnitt vorgesehen ist, der einerseits über einen vertikalen Stab mit dem oberen Trägerabschnitt und andererseits über ein horizontal ausgerichtetes und Dehnungsmessstreifen aufweisendes Federelement mit dem unteren Trägerabschnitt verbunden ist.

Nachteilig bei der bekannten Messplatte ist, dass oben und unten parallel zu dem horizontal ausgerichteten, die Dehnungsmessstreifen aufweisendem Federelement, weitere horizontale Biegestege bzw. Biegestäbe vorgesehen sind, die ebenfalls den endseitigen Trägerabschnitt mit einem Trägerabschnitt verbinden und durch die die Einwirkung störender Scherkräfte auf das Federelement ausgeschaltet werden soll. Dies führt zu einer relativ komplizierten und entsprechend schwierig herzustellenden Messplatte.

Aus der DE 25 43 354 A1 ist eine Kraftmessplatte dargestellt, deren oberer Trägerabschnitt über einem vertikalen Stab mit einem horizontalen, einen Dehnungsmessstreifen aufweisenden Federelement verbunden ist.

Aus der JP 09318469 A ist ein Kraftsensor mit einem ringförmigen bzw. hohlzylindrischen Sensorkörper bekannt. Entsprechend weist der Sensorkörper einen ringförmigen oberen Trägerabschnitt auf, der über einen L-förmigen Schenkel mit zwei rechtwinklig zueinander angeordneten Armen mit einem unteren Trägerabschnitt, der ebenfalls ringförmig ausgebildet ist, verbunden ist. Dabei ist der erste Arm mit dem unteren Trägerabschnitt und der zweite Arm mit dem oberen Trägerabschnitt verbunden. Dehnungsmessstreifen sind in Vertiefungen der Außenseiten der Arme angeordnet.

Nachteilig dabei ist, dass zum einen die Dehnungsmessstreifen in der Ebene ihrer flächigen Ausdehnung beansprucht werden und dass zum anderen durch die L-förmige Ausgestaltung des Schenkels 112 ein Übersprechen vertikaler und horizontaler Kraftkomponenten erfolgt.

Aus der US 5 490 427 A ist ebenfallsein Kraftsensor mit einem ringförmigen bzw. hohlzylindrischen Sensorkörper bekannt. Entsprechend weist der Sensorkörper einen ringförmigen oberen Trägerabschnitt auf, der über einen L-förmigen Schenkel mit zwei rechtwinklig zueinander angeordneten Armen oder über einen T-förmigen Schenkel mit einem unteren Trägerabschnitt, der ebenfalls ringförmig ausgebildet ist, verbunden ist. Dabei ist der erste Arm mit dem unteren ringförmigen Trägerabschnitt und der zweite Arm und gegebenenfalls dritte Arm mit dem oberen Trägerabschnitt verbunden. Dehnungsmessstreifen sind auch hier in Vertiefungen der Außenseiten der Arme angeordnet.

Nachteilig dabei ist auch hier, dass zum einen die Dehnungsmessstreifen in der Ebene ihrer flächigen Ausdehnung beansprucht werden und das zum anderen durch die L-förmige oder T-förmige Ausgestaltung des Schenkels bzw. der Arme ein Übersprechen vertikaler und horizontaler Kraftkomponenten erfolgt.

Aus der US 4 483 203 A ist ein vielachsiger Kraftsensor zur Messung von Kräften und Momenten in jeder von drei orthogonalen Richtungen bekannt. Eine ebene Platte weist drei ineinandergreifende U-förmige Nuten auf, die die Platte in einseitig gespannte Schenkel bzw. Balkenabschnitte unterteilt, die jeweils um 90° zueinander versetzt sind. Dabei werden Paare von Balken gebildet, die eine Reihe von Bohrungen aufweisen, in deren Inneren an den entstehenden Dünnstellen Dehnungsmessstreifen angeordnet sind,

Nachteilig bei diesem bekannten Sensor ist, dass zum einen die Dehnungsmessstreifen relativ aufwendig in Bohrungen der Balken bzw. Stäbe angebracht werden müssen und dass zum anderen der bekannte Sensor durch seinen räumlichen Aufbau mit mittiger orthogonaler Belastungsrichtung nur schwer zur Verwendung in Waagen eingesetzt werden kann.

Aufgabe der vorliegenden Erfindung ist es daher, die bekannte Messplatte so zu verbessern, dass sie einfacher und unkomplizierter ausgebildet ist und entsprechend leichter und kostengünstiger herstellbar ist. Ein Übersprechen eingeleiteter vertikaler und horizontale Kräfte soll dabei ebenfalls weitgehend vermieden werden.

Diese Aufgabe wird in Verbindung mit dem Oberbegriff des Anspruches 1 dadurch gelöst, dass dem unteren Trägerabschnitt an seinem dem ersten endseitigen Trägerabschnitt abgewandten Ende ein zweiter endseitiger Trägerabschnitt vorgelagert ist, über den der untere Trägerabschnitt über einen horizontalen Stab mit dem oberen Trägerabschnitt verbunden ist, und dass der zweite endseitige Trägerabschnitt mit dem unteren Trägerabschnitt über ein vertikal ausgerichtetes und Dehnungsmessstreifen aufweisendes Federelement verbunden ist, dass die Federelemente an ihrer Außenseite eben ausgebildet sind und in die benachbarten Schmalseiten der Trägerabschnitte übergehen, und dass die dem oberen Trägerabschnitt abgewandten Außenseiten der Federelemente die Dehnungsmessstreifen aufweisen.

Durch die Verbindung des unteren Trägerabschnittes an einem Ende über einen vertikalen Stab und an seinem anderen Ende über einen horizontalen Stab wird ein Übersprechen vertikaler und horizontaler Kraftkomponenten innerhalb der Kraftmessplatte verhindert bzw. die Kraftkomponenten beim Einleiten einer Kraft in den oberen Teilabschnitt werden gegenüber dem unteren Teilabschnitt entkoppelt. Der Aufbau der Kraftmessplatte wird dabei erheblich vereinfacht. Die Stäbe der Kraftmessplatte lassen sich zudem relativ einfach und kostengünstig durch Schlitze herstellen. Die Anordnung der DMS auf der Außenseite des Federelementes vereinfacht deren Positionierung bzw. Herstellung.

Durch das vertikal ausgerichtete Federelement mit Dehnungsmessstreifen lassen sich die entkoppelten horizontalen Kraftkomponenten bestimmen und beispielsweise zur Fehlerkorrektur bei einer schräg aufgestellten bzw. geneigten Waage nutzen.

Nach einer weiteren bevorzugten Ausführungsform der Erfindung weist die dem oberen Trägerabschnitt abgewandte Außenseite des Federelementes die Dehnungsmessstreifen (DMS) auf, die in Längsrichtung der Außenseite in einer Reihe angeordnet sind.

Nach einer weiteren bevorzugten Ausführungsform der Erfindung bildet das horizontale Federelement als Verbindung zwischen dem unteren Trägerabschnitt und dem ersten endseitigen Trägerabschnitt und/oder das vertikale Federelement als Verbindung zwischen dem unteren Trägerabschnitt und dem zweiten endseitigen Trägerabschnitt bzw. dem horizontalen Stab eine Dünnstelle, die zu den benachbarten Trägerabschnitten hin in ihrer Dicke ansteigt, wobei das Federelement an seiner Außenseite eben ausgebildet ist und in die benachbarten Schmalseiten der Trägerabschnitte übergeht. Dadurch wird es ermöglicht, vier DMS an Stellen gleicher Dehnung in einer Reihe anzuordnen.

Nach einer weiteren bevorzugten Ausführungsform der Erfindung ist dem horizontal ausgerichteten Federelement und/oder dem vertikal ausgerichteten Federelement ein Überlastanschlag zugeordnet.

Dabei werden zu große Kräfte direkt von dem oberen Teilabschnitt auf den unteren Teilabschnitt übertragen, ohne die Federelemente über ihre maximale Belastbarkeit hinaus zu belasten.

Gemäß einer bevorzugten Ausführungsform der Erfindung bildet ein das Federelement umgebender Bereich des plattenförmigen Trägers ein separates Federelementteil, das unabhängig von dem Restteil hergestellt und mit dem Restteil des plattenförmigen Trägers fest verbunden ist.

Dadurch ist es möglich, das separate, relativ kleine Federelementteil unabhängig von dem Restteil getrennt herzustellen. Dabei kann das Federelementteil aus einem relativ teuren, hochwertigen und/oder schwerer zu bearbeitenden Federmaterial und das Restteil aus einem preiswerteren und/oder einfacher zu bearbeitenden Federmaterial hergestellt werden. Bevorzugt ist dabei der Überlastanschlag in dem Federelementteil angeordnet.

Gemäß einer weiteren bevorzugten Ausführungsform der Erfindung ist das Federelementteil aus einer aushärtbaren Nickel-Chrom-Eisen-Legierung mit einem Nickelgehalt zwischen 36 und 60% und einem Chromgehalt zwischen 15 und 25% ausgebildet. Vorzugsweise wird dabei Inconel verwendet, wie es beispielsweise aus der DE 10 2005 060 106 A1 bekannt ist.

Nach einer weiteren bevorzugten Ausführungsform der Erfindung sind das Federelementteil mit dem Federelement mit horizontaler Ausrichtung und das Federelementteil mit dem Federelement mit vertikaler Ausrichtung gleich ausgebildet und werden entsprechend ihrer vorgesehenen Position mit den Restteilen beispielsweise durch Verschweißen oder Verkleben verbunden.

Das Federelementteil kann beispielsweise durch Drahterodieren oder Laserschneiden hergestellt werden.

Gemäß einer weiteren bevorzugten Ausführungsform der Erfindung werden die Dehnungsmessstreifen durch Dünnschichtabscheidung beispielsweise Sputtern (Kathodenzerstäubung) auf das Federelement aufgebracht. Insbesondere bei der Verwendung eines separat herstellbaren Federelementes ist es wirtschaftlich möglich, das für das Sputtern benötigte Vakuum zur Verfügung zu stellen. Aufgesputterte Dehnungsmessstreifen haben den Vorteil, dass sich auf diese Weise sehr hochohmige Dehnungsmessstreifen herstellen lassen. Dadurch sinkt der Stromverbrauch, was besonders bei batteriebetriebenen Waagen vorteilhaft ist.

Nach einer bevorzugten Ausführungsform der Erfindung ist die Kraftmessplatte mit mindestens einer weiteren Kraftmessplatte zur Bildung einer elektronischen Waage mit ihrem oberen Trägerabschnitt an einem Wägeplattform-Unterbau und mit ihrem unteren Trägerabschnitt an einem Grundkörper der Waage befestigt. Insbesondere werden bei einem Wägeplattform-Unterbau mit einem dreieckig geformten Umriss und einem entsprechenden Grundkörper, drei Kraftmessplatten zur Kraftübertragung verwendet.

Weitere Einzelheiten der Erfindung ergeben sich aus der nachfolgenden ausführlichen Beschreibung und den beigefügten Zeichnungen, in denen bevorzugte Ausführungsformen der Erfindung beispielhaft veranschaulicht sind.

In den Zeichnungen zeigen:
- Figur 1:: eine Vorderansicht einer Kraftmessplatte,
- Figur 2:: eine Vorderansicht einer weiteren Kraftmessplatte mit einem zusätzlichen, vertikal ausgerichteten Federelement,
- Figur 3:: eine Vorderansicht einer Kraftmessplatte entsprechend Fig. 1 mit einem separaten Federelementteil,
- Figur 4:: eine Vorderansicht einer Kraftmessplatte entsprechend Fig. 2 mit zwei separaten Federelementteilen,
- Figur 5:: eine Vorderansicht eines separaten Federelementteiles in vergrößerter Darstellung,
- Figur 6:: eine Draufsicht auf ein separates Federelementteil mit vier in einer Reihe in Längsrichtung angeordneten DMS,
- Figur 7:: eine räumliche Draufsicht auf einen mit einem Grundkörper über drei Kraftmessplatten verbundenen Wägeplattform-Unterbau einer Waage und
- Figur 8:: eine Vorderansicht der Waage von Fig. 7.

Eine Kraftmessplatte 1 besteht im Wesentlichen aus einem plattenförmigen Träger 2 mit einem oberen Trägerabschnitt 3, einem unteren Trägerabschnitt 4, einem ersten endseitigen Trägerabschnitt 5 und einem horizontalen Federelement 6.

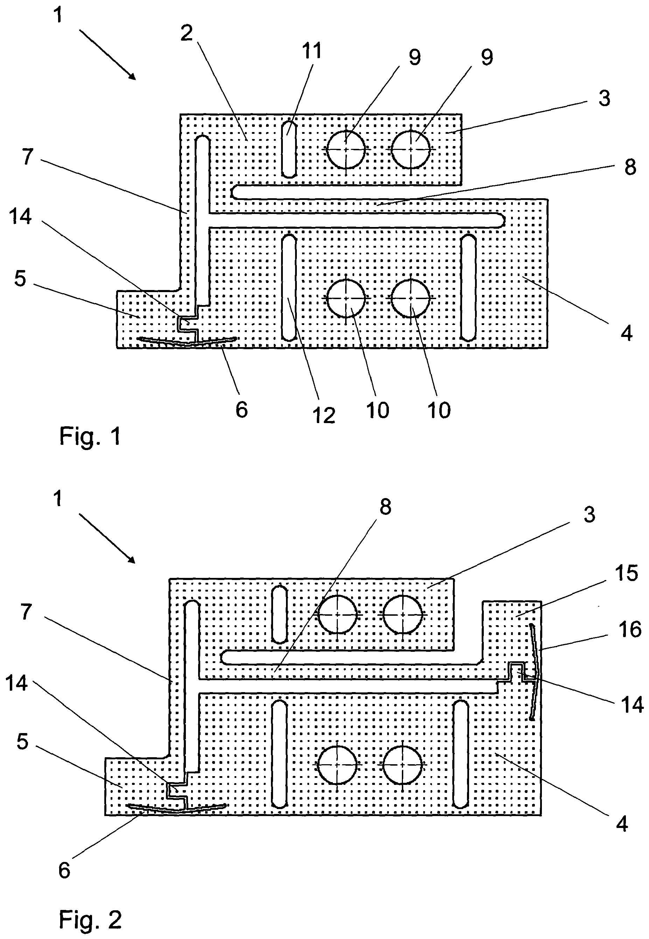

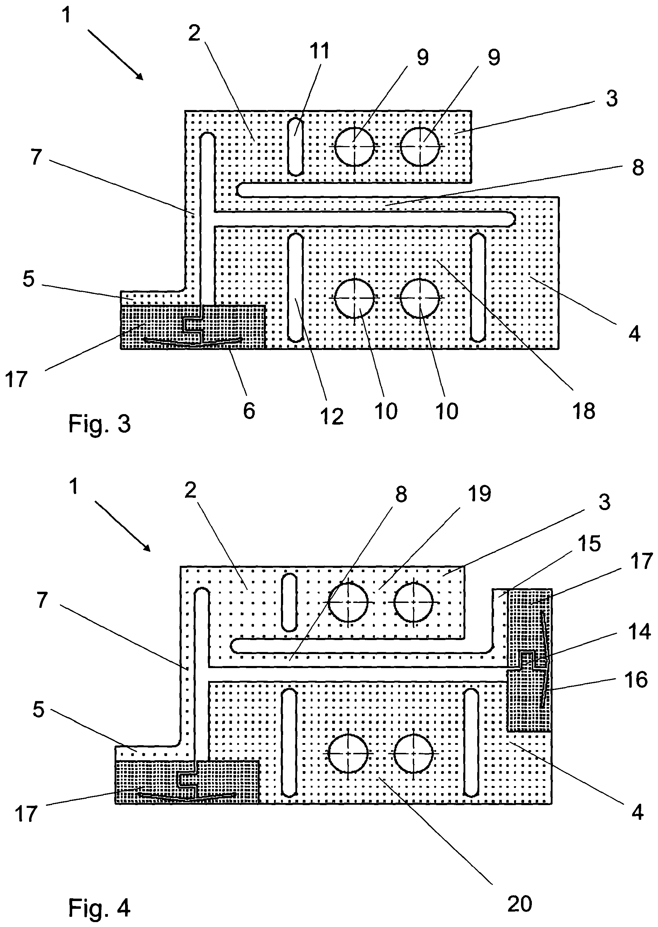

Der plattenförmige Träger 2 weist in vertikaler Richtung oben den oberen Trägerabschnitt 3 auf, der über einen vertikalen Stab 7 mit dem dem unteren Trägerabschnitt 4 vorgelagerten ersten endseitigen Trägerabschnitt 5 verbunden ist. Der erste endseitige Trägerabschnitt 5 ist seinerseits über das horizontal ausgerichtete Federelement 6 mit dem parallel zum oberen Trägerabschnitt 3 angeordneten unteren Trägerabschnitt 4 verbunden. An seinem dem ersten endseitigen Trägerabschnitt 5 abgewandten Ende ist der untere Trägerabschnitt 4 über einen horizontalen Stab 8 mit dem dem vertikalen Stab 7 zugewandten Ende des oberen Trägerabschnittes 3 verbunden. Der plattenförmige Träger 2 ist mit seinem oberen Trägerabschnitt 3 über zwei Löcher 9 und mit seinem unteren Trägerabschnitt 4 über zwei Löcher 10 befestigbar. Die vertikalen Schlitze 11, 12 dienen dazu, über Befestigungsschrauben 13 in die Kraftmessplatte 1 bzw. den plattenförmigen Träger 2 eingebrachte Verspannungen vom restlichen Teil des plattenförmigen Trägers 2 fernzuhalten. Zwischen dem endseitigen Trägerabschnitt 5 und dem unteren Trägerabschnitt 4 ist ein Überlastanschlag 14 angeordnet. Entsprechend den Ausführungsbeispielen der Figuren 2 und 4 ist dem unteren Trägerabschnitt 4 an seinem dem endseitigen Trägerabschnitt 5 abgewandten Ende ein zweiter endseitiger Trägerabschnitt 15 vorgelagert, über den der horizontale Stab 8 über ein vertikal ausgerichtetes Federelement 16 mit dem unteren Trägerabschnitt 4 verbunden ist.

Gemäß der Kraftmessplatte 1 der Figur 3 bildet ein das horizontale Federelement 6 umgebender Bereich des plattenförmigen Trägers 2 ein separates Federelementteil 17, das mit einem Restteil 18 des plattenförmigen Trägers 2, beispielsweise durch Verschweißen oder Verkleben, verbunden ist.

Gemäß dem Ausführungsbeispiel der Figur 4 ist entsprechend dem Ausführungsbeispiel der Figur 2 ein vertikales Federelement 16 vorgesehen, dass ebenfalls als separates Federelementteil 17 ausgebildet ist. Entsprechend dem Ausführungsbeispiel der Figur 4 wird der plattenförmige Träger 2 somit in zwei separate Federelementeile 17 und zwei Restteile 19, 20 unterteilt. Die vier Einzelteile 17, 19, 20 werden separat hergestellt. Die beiden Restteile 19, 20 werden über die beiden Federelementteile 17 miteinander verbunden.

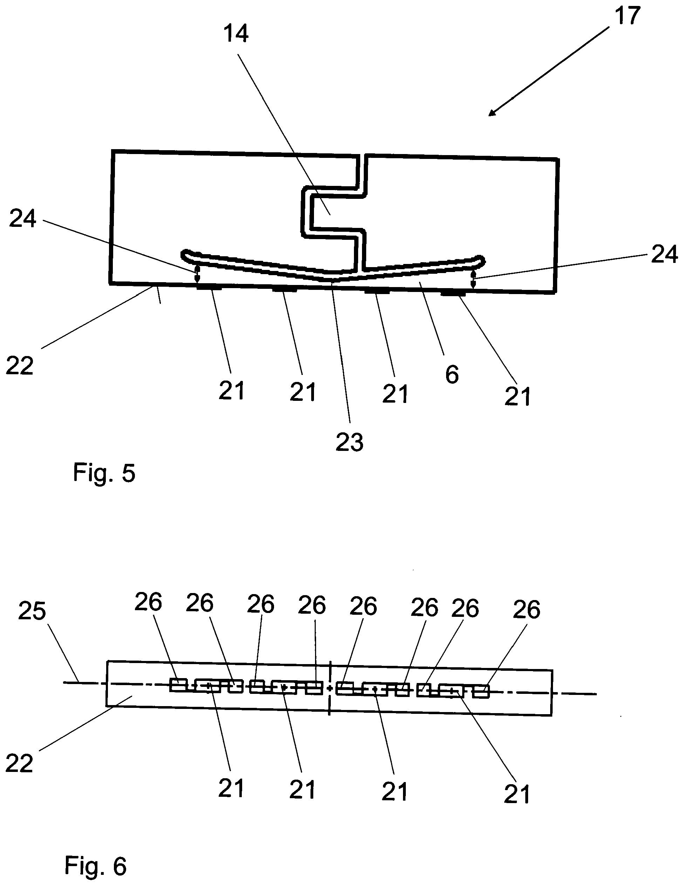

Figur 5 zeigt eine vergrößerte Darstellung eines separaten Federelementteiles 17 mit horizontalem Federelement 6 und vier Dehnmessstreifen 21, die an der Außenseite 22 in Längsrichtung in einer Reihe angeordnet sind. Dabei weist das separate Federelementteil 17 den Überlastanschlag 14 auf. Das gleiche gilt entsprechend für ein vertikal angeordnetes Federelementteil 17.

Das Federelement 6 bildet eine mittig angeordnete Dünnstelle 23, die zu den benachbarten Trägerabschnitten 4, 5 in ihrer Dicke 24 ansteigt, wobei die Außenseite 22, die die Dehnungsmessstreifen 21 trägt, eben ausgebildet ist.

Figur 6 zeigt eine Außenseite 22 mit darauf angebrachten vier Dehnungsmessstreifen 21 mit Anschlüssen 26. Die Dehnungsmessstreifen 21 nebst Anschlüssen 26 werden durch Sputtern unter Vakuum auf die Außenseite 22 des separaten Federelementteiles 17 aufgebracht. Zur Demonstration der Längsrichtung der Außenseite 22 ist in Fig. 6 eine Längsachse 25 dargestellt.

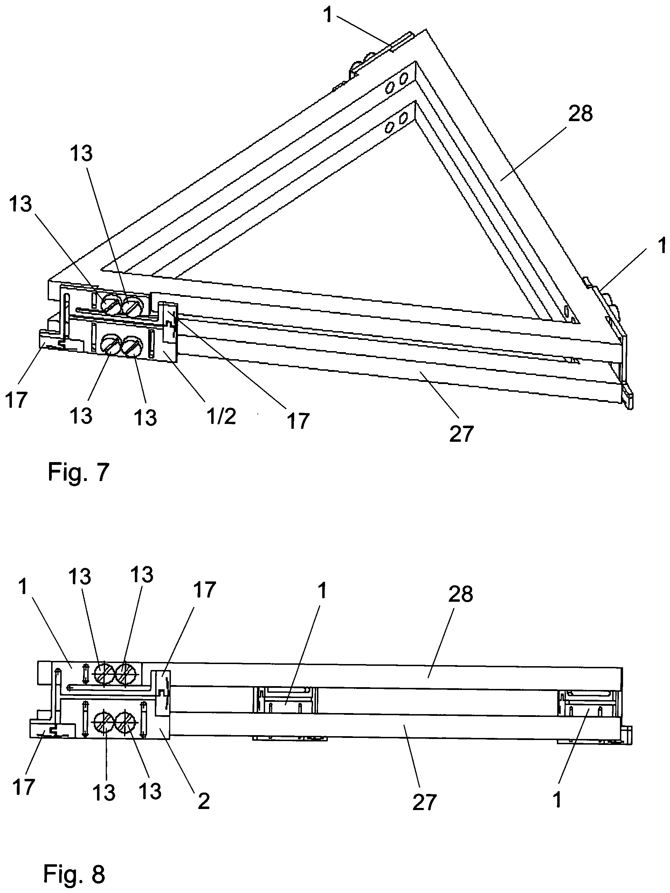

Die Figuren 7 und 8 zeigen das Beispiel einer im einzelnen nicht weiter dargestellten Waage, bei der ein Grundkörper 27 mit einem gleichseitigen dreieckigen Umriss über drei Kraftmessplatten 1 mit einem entsprechend geformten Wägeplattform-Unterbau 28 verbunden ist.

### Bezugszeichenliste

- 1: Kraftmessplatte
- 2: plattenförmiger Träger
- 3: oberer Trägerabschnitt
- 4: unterer Trägerabschnitt
- 5: erster endseitiger Trägerabschnitt
- 6: horizontales Federelement
- 7: vertikaler Stab
- 8: horizontaler Stab
- 9: Loch von 3
- 10: Loch von 4
- 11: Schlitz von 3
- 12: Schlitz von 4
- 13: Befestigungsschraube
- 14: Überlastanschlag
- 15: zweiter endseitiger Trägerabschnitt
- 16: vertikales Federelement
- 17: separates Federelementteil
- 18: Restteil von 2
- 19: Restteil (oberes)
- 20: Restteil (unteres)
- 21: Dehnungsmessstreifen
- 22: Außenseite von 17
- 23: Dünnstelle von 6
- 24: Dicke von 6
- 25: Längsachse
- 26: Anschluss
- 27: Grundkörper
- 28: Wägeplattform-Unterbau

## Patentansprüche

1. Kraftmessplatte (1), bestehend aus einem plattenförmigen Träger (2), der bei vertikaler Anordnung in vertikaler Richtung oben einen oberen Trägerabschnitt (3) und in vertikaler Richtung unten einen unteren Trägerabschnitt (4) aufweist, wobei ein erster endseitiger Trägerabschnitt (5) vorgesehen ist, der einerseits über einen vertikalen Stab (7) mit dem oberen Trägerabschnitt (3) und andererseits über ein horizontal ausgerichtetes und Dehnungsmessstreifen (21) aufweisendes Federelement (6) mit dem unteren Trägerabschnitt verbunden ist, wobei dem unteren Trägerabschnitt (4) an seinem dem ersten endseitigen Trägerabschnitt (5) abgewandten Ende ein zweiter endseitiger Trägerabschnitt (15) vorgelagert ist, über den der untere Trägerabschnitt (4) über einen horizontalen Stab (8) mit dem oberen Trägerabschnitt (3) verbunden ist, und wobei der zweite endseitige Trägerabschnitt (15) mit dem unteren Trägerabschnitt (4) über ein vertikal ausgerichtetes und Dehnungsmessstreifen (21) aufweisendes Federelement (16) verbunden ist, **dadurch gekennzeichnet, dass** die Federelemente (6, 16) an ihrer Außenseite (22) eben ausgebildet sind und in die benachbarten Schmalseiten der Trägerabschnitte (4, 5, 15) übergehen, und dass die dem oberen Trägerabschnitt (3) abgewandten Außenseiten (22) der Federelemente (6, 16) die Dehnungsmessstreifen (21) aufweisen.

2. Kraftmessplatte nach Anspruch 1,
**dadurch gekennzeichnet,**
**dass** das horizontale Federelement (6) als Verbindung zwischen dem unteren Trägerabschnitt (4) und dem ersten endseitigen Trägerabschnitt (5) und/oder das vertikale Federelement (16) als Verbindung zwischen dem unteren Trägerabschnitt (4) und dem zweiten endseitigen Trägerabschnitt (15) eine Dünnstelle (23) bilden, die zu den benachbarten Trägerabschnitten (4, 5) hin in ihrer Dicke (24) ansteigt.

3. Kraftmessplatte nach Anspruch 1 oder 2,
**dadurch gekennzeichnet,**
**dass** die Dehnungsmessstreifen (21) in Längsrichtung der Außenseite (22) in einer Reihe angeordnet sind.

4. Kraftmessplatte nach einem der Ansprüche 1 bis 3,
**dadurch gekennzeichnet,**
**dass** dem horizontal ausgerichteten Federelement (6) und/oder einem vertikal ausgerichteten Federelement (16) ein Überlastanschlag (14) zugeordnet ist.

5. Kraftmessplatte nach einem der Ansprüche 1 bis 4,
**dadurch gekennzeichnet,**
**dass** ein das Federelement (6) umgebender Bereich des plattenförmigen Trägers (2) ein separates Federelementteil (17) bildet, das unabhängig von dem Restteil (18) hergestellt und mit dem Restteil (18) des
plattenförmigen Trägers (2) fest verbunden ist.

6. Kraftmessplatte nach Anspruch 5,
**dadurch gekennzeichnet,**
**dass** der Überlastanschlag (14) in dem Federelementteil (17) angeordnet ist.

7. Kraftmessplatte nach Anspruch 5 oder 6,
**dadurch gekennzeichnet,**
**dass** das Federelementteil (17) und das Restteil (18, 19, 20) des plattenförmigen Körpers aus unterschiedlichem Material ausgebildet sind.

8. Kraftmessplatte nach Anspruch 7,
**dadurch gekennzeichnet,**
**dass** das Federelementteil (17) aus einer aushärtbaren Nickel-Chrom-Eisen-Legierung ausgebildet ist.

9. Kraftmessplatte nach einem der Ansprüche 5 bis 8,
**dadurch gekennzeichnet,**
**dass** das Federelementteil (17) mit dem Federelement (6) mit horizontaler Ausrichtung und das Federelementteil (17) mit dem Federelement (16) mit vertikaler Ausrichtung gleich ausgebildet sind.

10. Kraftmessplatte nach einem der Ansprüche 5 bis 9,
**dadurch gekennzeichnet,**
**dass** das Federelementteil (17) durch Drahterodieren hergestellt ist.

11. Kraftmessplatte nach einem der Ansprüche 1 bis 10,
**dadurch gekennzeichnet,**
**dass** die Dehnungsmessstreifen (21) durch Dünnschichtabscheidung auf das Federelement (6, 16) aufgebracht sind.

12. Verwendung von mindestens drei Kraftmessplatten (1) nach einem der Ansprüche 1 bis 11, in einer elektronischen Waage mit einem Wägeplattform-Unterbau (28) und einem Grundkörper (27)
**dadurch gekennzeichnet,**
**dass** die Kraftmessplatten mit ihrem oberen Trägerabschnitt (3) an dem Wägeplattform-Unterbau (28) und mit ihrem unteren Trägerabschnitt (4) an dem Grundkörper (27) der Waage befestigt sind.

13. Verwendung von mindestens drei Kraftmessplatten (1) nach einem der Ansprüche 1 bis 11, in einer elektronischen Waage mit einem Wägeplattform-Unterbau (28) und einem Grundkörper (27),
**dadurch gekennzeichnet,**
**dass** der Wägeplattform-Unterbau (28) und der Grundkörper (27), einen dreieckig geformten Umriss aufweisen und dass die drei Kraftmessplatten (1) zur Kraftübertragung verwendet werden.

## Claims

1. Force measuring plate (1) consisting of a plate-shaped support (2), which in vertical arrangement has an upper support section (3) at the top in vertical direction and a lower support section (4) at the bottom in vertical direction, wherein a first end-side support section (5) is provided, which on one side is connected by way of a vertical rod (7) with the upper support section (3) and on the other side is connected by way of a horizontally oriented spring element (6), which has a strain gauge (21), with the lower support section, wherein provided in front of the lower support section (4) at its end remote from the first end-side support section (5) is a second end-side support section (15) by way of which the lower support section (4) is connected with the upper support section (3) via a horizontal rod (8), and wherein the second end-side support section (15) is connected with the lower support section (4) by way of a vertically oriented spring element (16) having a strain gauge (21), **characterised in that** the spring elements (6, 16) are constructed to be flat at the outer side (22) thereof and merge into the adjacent narrow sides of the support sections (4, 5, 15) and that the outer sides (22), which are remote from the upper support section (3), of the spring elements (6, 16) have the strain gauges (21).

2. Force measuring plate according to claim 1, **characterised in that** the horizontal spring element (6) as connection between the lower support section (4) and the first end-side support section (5) and/or the vertical spring element (16) as connection between the lower support section (4) and the second end-side support section (15) forms or form a thin location (23) which increases in its thickness (24) towards the adjacent support sections (4, 5).

3. Force measuring plate according to claim 1 or 2, **characterised in that** the strain gauges (21) are arranged in a row in the longitudinal direction of the outer side (22).

4. Force measuring plate according to any one of claims 1 to 3, **characterised in that** an overload abutment (14) is associated with the horizontal oriented spring element (6) and/or a vertically oriented spring element (16).

5. Force measuring plate according to any one of claims 1 to 4, **characterised in that** a region, which surrounds the spring element (6), of the plate-shaped support (2) forms a separate spring element part (17) which is produced independently of the remaining part (18) and is fixedly connected with the remaining part (18) of the plate-shaped support (2).

6. Force measuring plate according to claim 5, **characterised in that** the overload abutment (14) is arranged in the spring element part (17).

7. Force measuring plate according to claim 5 or 6, **characterised in that** the spring element part (17) and the remaining part (18, 19, 20) of the plate-shaped body are formed from different materials.

8. Force measuring plate according to claim 7, **characterised in that** the spring element part (17) is formed from a hardenable nickel-chromium-iron alloy.

9. Force measuring plate according to any one of claims 5 to 8, **characterised in that** the spring element part (17) with the spring element (6) with horizontal orientation and the spring element part (17) with the spring element (16) with vertical orientation are constructed to be same.

10. Force measuring plate according to any one of claims 5 to 9, **characterised in that** the spring element part (17) is produced by wire erosion.

11. Force measuring plate according to any one of claims 1 to 10, **characterised in that** the strain gauges (21) are mounted on the spring element (6, 16) by thin-layer deposition.

12. Use of at least three force measuring plates (1) according to any one of claims 1 to 11 in electronic scales with a weighing platform substructure (28) and a base body (27), **characterised in that** the force measuring plates are secured by the upper support section (3) thereof to the weighing platform substructure (28) and by the lower support section (4) thereof to the base body (27) of the scales.

13. Use of at least three force measuring plates (1) according to any one of claims 1 to 11 in electronic scales with a weighing platform substructure (28) and a base body (27), **characterised in that** the weighing platform substructure (28) and the base body (27) have a triangular outline and that the three force measuring plates (1) are used for force transmission.

## Revendications

1. Plaque de mesure de force (1), constituée d'un support (2) en forme de plaque, qui présente, dans un agencement vertical, dans la direction verticale en haut une partie de support supérieure (3) et dans la direction verticale en bas une partie de support inférieure (4), dans laquelle une première partie de support du côté de l'extrémité (5) est prévue, qui est reliée d'une part, par le biais d'une barre verticale (7), à la partie de support supérieure (3) et d'autre part, par le biais d'un élément ressort (6) orienté horizontalement et présentant des extensomètres (21), à la partie de support inférieure,
dans laquelle
une deuxième partie de support du côté de l'extrémité (15), par l'intermédiaire de laquelle la partie de support inférieure (4) est reliée à la partie de support supérieure (3) par le biais de la barre horizontale (8), est montée en amont de la partie de support inférieure (4) par son extrémité opposée à la première partie de support du côté de l'extrémité (5),
et dans laquelle
la deuxième partie de support du côté de l'extrémité (15) est reliée à la partie de support inférieure (4) par un élément ressort (16) orienté verticalement et comprenant des extensomètres (21),
**caractérisée en ce que**
les éléments ressort (6, 16) sont plats sur leur face extérieure (22) et passent dans les petits côtés voisins des parties de support (4, 5, 15),
et
**en ce que** les faces extérieures (22) des éléments ressort (6, 16) opposées à la partie de support supérieure (3) comprennent les extensomètres (21).

2. Plaque de mesure de force selon la revendication 1, **caractérisée**
**en ce que** l'élément ressort horizontal (6) en tant que liaison entre la partie de support inférieure (4) et la première partie de support du côté de l'extrémité (5) et/ou l'élément ressort vertical (16) en tant que liaison entre la partie de support inférieure (4) et la deuxième partie de support du côté de l'extrémité (15) forment un point mince (23) dont l'épaisseur (24) augmente en direction des parties de support (4, 5) voisines.

3. Plaque de mesure de force selon la revendication 1 ou 2,
**caractérisée**
**en ce que** les extensomètres (21) sont agencés en ligne dans la direction longitudinale de la face extérieure (22).

4. Plaque de mesure de force selon l'une quelconque des revendications 1 à 3,
**caractérisée**
**en ce qu'**une butée de surcharge (14) est associée à l'élément ressort orienté horizontalement (6) et/ou à un élément ressort orienté verticalement (16).

5. Plaque de mesure de force selon l'une quelconque des revendications 1 à 4,
**caractérisée**
**en ce qu'**une zone du support en forme de plaque (2) entourant l'élément ressort (6) forme une partie séparée d'élément ressort (17), qui est fabriquée indépendamment de la partie restante (18) et qui est assemblée solidement à la partie restante (18) du support en forme de plaque (2).

6. Plaque de mesure de force selon la revendication 5,
**caractérisée**
**en ce que** la butée de surcharge (14) est agencée dans la partie d'élément ressort (17).

7. Plaque de mesure de force selon la revendication 5 ou 6,
**caractérisée**
**en ce que** la partie d'élément ressort (17) et la partie restante (18, 19, 20) du corps en forme de plaque sont faites d'un matériau différent.

8. Plaque de mesure de force selon la revendication 7,
**caractérisée**
**en ce que** la partie d'élément ressort (17) est faite d'un alliage nickel-chrome-fer durcissant.

9. Plaque de mesure de force selon l'une quelconque des revendications 5 à 8,
**caractérisée**
**en ce que** la partie d'élément ressort (17) comprenant l'élément ressort orienté horizontalement (6) et la partie d'élément de ressort (17) comprenant l'élément ressort orienté verticalement (16) sont de conception identique.

10. Plaque de mesure de force selon l'une quelconque des revendications 5 à 9,
**caractérisée**
**en ce que** la partie d'élément ressort (17) est fabriquée par électroérosion par fil.

11. Plaque de mesure de force selon l'une quelconque des revendications 1 à 10,
**caractérisée**
**en ce que** les extensomètres (21) sont appliqués sur l'élément ressort (6, 16) par dépôt de couches minces.

12. Utilisation d'au moins trois plaques de mesure de force (1) selon l'une quelconque des revendications 1 à 11, dans une balance électronique comprenant une infrastructure de plateforme de pesage (28) et un corps de base (27),
**caractérisée**
**en ce que** les plaques de mesure de force sont fixées par leur partie de support supérieure (3) sur l'infrastructure de plateforme de pesage (28) et par leur partie de support inférieure (4) sur le corps de base (27) de la balance.

13. Utilisation d'au moins trois plaques de mesure de force (1) selon l'une quelconque des revendications 1 à 11, dans une balance électronique comprenant une infrastructure de plateforme de pesage (28) et un corps de base (27),
**caractérisée**
**en ce que** l'infrastructure de plateforme de pesage (28) et le corps de base (27) présentent un profil triangulaire et en ce que les trois plaques de mesure de force (1) sont utilisées pour le transfert de forces.
